# EUROPÄISCHE PATENTSCHRIFT

(11) **EP 2 520 929 B1**
(45) Veröffentlichungstag und Bekanntmachung des Hinweises auf die Patenterteilung: **04.06.2014**
(21) Anmeldenummer: 12163573.4
(22) Anmeldetag: 10.04.2012
(51) Int. Cl.: G01N 27/414

(54) **Gassensor mit metallorganische Gerüste enthaltender gassensitiver Schicht**
Gas sensor with gas-sensitive layer comprising metal-organic frameworks
Capteur de gaz avec une couche sensitive comprenant des réseaux organométalliques

(30) Priorität: 06.05.2011 DE 102011075396
(43) Veröffentlichungstag der Anmeldung: 07.11.2012
(73) Patentinhaber: Siemens Aktiengesellschaft, 80333 München (DE)
(72) Erfinder: Fleischer, Maximilian, 85635 Höhenkirchen (DE); Pohle, Roland, 85570 Herdweg (DE); Wiesner, Kerstin, 85640 Putzbrunn (DE); von Sicard, Oliver, 80469 München (DE)

(56) Entgegenhaltungen:
- WO-A1-2010/078337
- DE-A1-102005 010 032
- MARK D. ALLENDORF ET AL: "Stress-Induced Chemical Detection Using Flexible Metal-Organic Frameworks", JOURNAL OF THE AMERICAN CHEMICAL SOCIETY, Bd. 130, Nr. 44, 5. November 2008 (2008-11-05), Seiten 14404-14405, XP55033490, ISSN: 0002-7863, DOI: 10.1021/ja805235k
- SABINE ACHMANN ET AL: "Metal-Organic Frameworks for Sensing Applications in the Gas Phase", SENSORS, Bd. 9, Nr. 3, 1. Januar 2009 (2009-01-01), Seiten 1574-1589, XP55033423, ISSN: 1424-8220, DOI: 10.3390/s90301574

## Beschreibung

Die Erfindung betrifft einen chemischen Gassensor.

Die Detektion oder Erfassung von flüchtigen organischen Verbindungen (VOC) ist für eine Reihe von Applikationen von großem Interesse. Beispiele sind die Beurteilung der Luftgüte in Räumen, das energieeffiziente Ansteuern von Klimaanlagen, die medizinische Diagnostik, die Sicherheitstechnik, wie beispielsweise die Detektion von Sprengstoffen oder die Kontrolle gereinigter Luft. Problematisch an flüchtigen organischen Verbindungen ist, dass sie in einer sehr großen Molekülvielfalt auftreten. Wichtige Vertreter sind beispielsweise Aldehyde, Alkohole, Amine, Carbonsäuren, Ester, Ketone, Kohlenwasserstoffe, Terpene, Thiole usw. Diese Vielfalt erschwert es, einen Sensor zu verwirklichen, der auf einen Großteil der flüchtigen organischen Verbindungen ein ausreichend hohes Sensorsignal liefert. Gerüche bestehen oft aus einer Vielzahl von Verbindungen, die außerdem häufig in sehr geringen Mengen vorliegen. Flüchtige organische Verbindungen besitzen in der Regel eine so geringe Geruchsschwelle, dass vom Menschen deutlich wahrnehmbare Konzentrationen gleichzeitig technisch nur schwierig detektierbar sind.

Es ist Aufgabe der vorliegenden Erfindung, eine Vorrichtung zur Detektion wenigstens einer flüchtigen organischen Verbindung oder wenigstens eines oxidierenden Gases anzugeben, mit der bereits geringe Mengen der flüchtigen organischen Verbindung oder des oxidierenden Gases erfassbar sind.

Diese Aufgabe wird durch eine Vorrichtung mit den Merkmalen von Anspruch 1 gelöst. Die Unteransprüche betreffen vorteilhafte Ausgestaltungen der Erfindung.

Die erfindungsgemäße Vorrichtung umfasst ein Erfassungsmaterial, dessen elektronische Austrittsarbeit bei einer Wechselwirkung mit einer flüchtigen organischen Verbindung oder einem oxidierenden Gas verändert wird. Das Erfassungsmaterial ist ein Material aus der Gruppe der Metal-Organic-Frameworks (MOF). Weiterhin umfasst die Vorrichtung Mittel zur Erfassung von Veränderungen der elektronischen Austrittsarbeit des Erfassungsmaterials.

Für die Erfindung wurde erkannt, dass das besondere an Metal-Organic-Frameworks ein großer Hohlraum inmitten einer Elementarzelle des metallorganischen Gerüsts ist. Dieser Hohlraum ermöglicht den Einsatz und die Anwendung von Metal-Organic-Frameworks in Sensoren für Gase. Hierbei ist die große innere Oberfläche (bis über 4000 m²/g) von Bedeutung und von großem Vorteil. Diese große innere Oberfläche steht für die Wechselwirkung mit Gasen zur Verfügung. Weiterhin lässt sich vorteilhaft eine hohe Selektivität auf bestimmte Substanzen erreichen, indem die Größe der Poren bzw. des Hohlraums festgelegt wird. Dies kann wiederum über die Größe der organischen Liganden gesteuert werden. Somit ist eine Anpassung an ein zu detektierendes Gas durchführbar.

Die Verwendbarkeit der Metal-Organic-Frameworks bei Gassensoren ist bekannt aus WO 2010/078337.

Die Lage der Hohlräume inmitten der Elementarzellen des metallorganischen Gerüsts ist in einem für Verhältnisse der elektronischen Interaktion großem Abstand von den Mitteln zur Erfassung einer Austrittsarbeitsänderung. Die Interaktion mit dem Gas an den inneren Oberflächen des Metal-Organic-Frameworks passiert mit anderen Worten in einem vergleichsweise großen Abstand von der Oberfläche des Erfassungsmaterials. Daher war eine messbare Änderung der Austrittsarbeit als Ergebnis von Gaseinflüssen nicht zu erwarten. Trotzdem hat sich in Versuchen herausgestellt, dass Gassensoren unter Verwendung von Metal-Organic-Frameworks gute Ergebnisse bzgl. flüchtiger organischer Verbindungen liefern.

In einer vorteilhaften Ausgestaltung kann die Vorrichtung eine Heizervorrichtung umfassen, beispielsweise eine Heizmäanderstruktur. Diese kann einerseits dazu dienen, das Metal-Organic-Framework auf eine benötige Betriebstemperatur zu bringen. Andererseits ist es auch möglich, bei einer Messung bei Raumtemperatur den Sensor durch Heizen zurückzusetzen, sofern sich die chemischen Reaktionen bei Raumtemperatur teilweise als nicht oder wenig reversibel herausstellen.

Bei dem erfindungsgemäßen Verfahren zur Herstellung einer Vorrichtung zur Erfassung wenigstens einer flüchtigen organischen Verbindung oder wenigstens eines oxidierenden Gases, wird einem Träger, insbesondere auf einem Siliziumsubstrat, ein Erfassungsmaterial aufgebracht, dessen elektronische Austrittsarbeit bei einer Wechselwirkung mit der flüchtigen organischen Verbindung oder dem oxidierenden Gas verändert wird. Das Erfassungsmaterial umfasst dabei ein Material aus der Gruppe der Metal-Organic-Frameworks. Weiterhin werden Mittel zur Erfassung von Änderungen der elektronischen Austrittsarbeit des Erfassungsmaterials erzeugt. Dabei wird das Erfassungsmaterial als Schicht mit einem nicht gassensitiven organischen Bindemittel, insbesondere Ethylzellulose, aufgebracht. Das organische Bindemittel verbleibt dabei in der Schicht und sorgt für eine ausreichende Haftung der Schicht auf dem Träger. Die Schicht kann beispielsweise mit den bekannten Siebdruck- oder Spin-Coating-Verfahren aufgebracht werden.

Weitere Vorteile und Einzelheiten der Erfindung werden anhand der Zeichnung erläutert. Dabei zeigen
Figur 1 einen Gassensor mit einer sensitiven Schicht, die ein Metal-Organic-Framework umfasst und
Figur 2 ein Messergebnis des Gassensors.

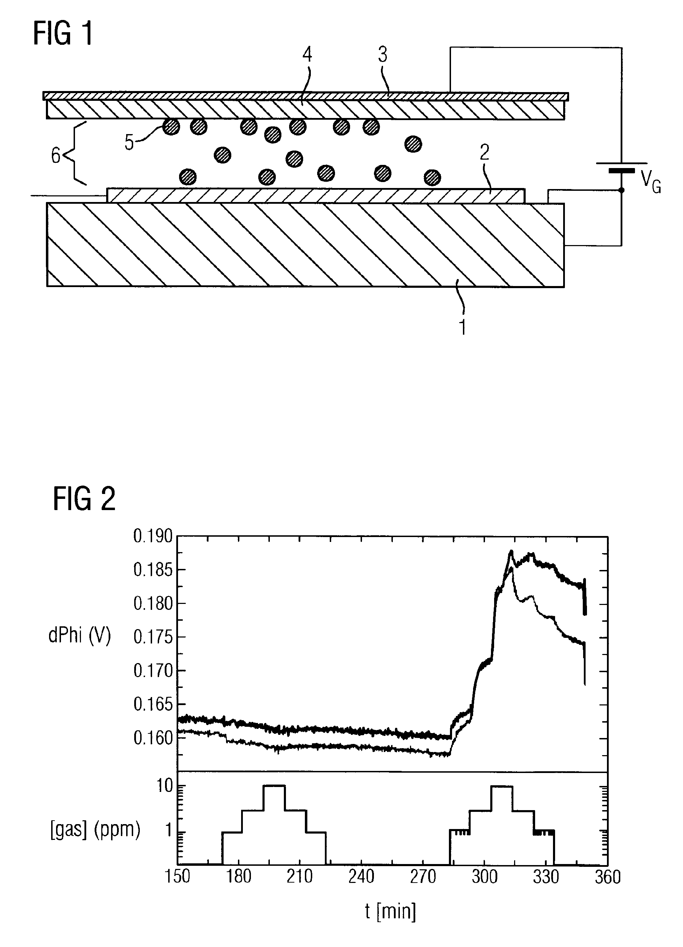

Figur 1 zeigt stark schematisiert einen beispielhaften Aufbau für einen erfindungsgemäßen Sensor. Ein Substrat 1, beispielsweise ein Siliziumsubstrat trägt dabei eine nicht näher dargestellte Feldeffekttransistorstruktur mit einer Drain-und einer Source-Elektrode. Beide werden von einer Passivierungsschicht 2 abgedeckt. Getrennt durch einen Luftspalt 6 befindet sich oberhalb der Passivierungsschicht 2 ein Träger 3 mit einer gassensitiven Schicht 4. Die gassensitive Schicht 4 umfasst dabei ein Metal-Organic-Framework, in diesem Beispiel ein poröses Cu₃BTC₂ Metal-Organic-Framework.

Sensoren lassen sich auch unter Verwendung der beispielsweise von BASF erhältlichen Metal-Organic-Frameworks Basolite F300 Iron benzene-1,3,5-tricarboxylate und C300 Copper benzene-1,3,5-tricarboxylate herstellen. Auch BASOLITE A100 Aluminium terephthalate und BASOLITE Z1200 2-Methylimidazole zinc sind verwendbar.

Gasmoleküle 5 dringen in den Luftspalt 6 ein. Dabei lagern sie sich in der gassensitiven Schicht 4, also dem Metal-Organic-Framework, an und verändern dessen Austrittsarbeit. Diese Änderung wird unter Zuhilfenahme der Feldeffekttransistorstruktur ausgemessen. Beispielsweise wird hierfür der Stromfluss durch die Feldeffekttransistorstruktur überwacht und Änderungen im Stromfluss als Sensorsignal aufgenommen. Eine weitere Möglichkeit, die in Figur 1 angedeutet ist, ist die elektrische Verbindung der gassensitiven Schicht 4 mit dem Substrat 1. Eine zwischengeschaltete Spannungsquelle regelt dabei den Verschiebungsstrom, der sich bei Austrittsarbeitsänderungen ergibt, zu 0 und die hierfür nötige Spannung wird als Sensorsignal verwendet.

Figur 2 zeigt zwei Messkurven des beschriebenen beispielhaften Sensors. Dabei ist die Änderung der Austrittsarbeit über der Zeit aufgetragen. Zusätzlich ist im unteren Teil des Graphen eingetragen, in welcher Konzentration die Gase Toluol und Pentanal dem Sensor zugeführt wurden. Dabei zeigen beide Messkurven im Bereich der Zugabe von Toluol, dass mit einer maximalen Konzentration von 10 ppm verwendet wurde, keinen nennenswerten Ausschlag. Die Zugabe von ebenfalls maximal 10 ppm Pentanal führt jedoch zu einem sehr deutlichen Sensorausschlag und Sensorsignal.

## Patentansprüche

1. Vorrichtung zur Erfassung wenigstens einer flüchtigen organischen Verbindung oder wenigstens eines oxidierenden Gases (5), umfassend:
- ein Erfassungsmaterial (4), dessen elektronische Austrittsarbeit bei einer Wechselwirkung mit der flüchtigen organischen Verbindung oder dem oxidierenden Gas (5) verändert wird,
- Mittel zur Erfassung von Änderungen der elektronischen Austrittsarbeit des Erfassungsmaterials,
**dadurch gekennzeichnet, dass** das Erfassungsmaterial ein Material aus der Gruppe der Metal-Organic-Frameworks umfasst.

2. Vorrichtung gemäß Anspruch 1, bei der die Mittel zur Erfassung von Änderungen der elektronischen Austrittsarbeit eine Feldeffekttransistorstruktur umfassen.

3. Vorrichtung gemäß Anspruch 1 oder 2, bei der das Erfassungsmaterial (4) im Bereich des Gates der Feldeffekttransistorstruktur vorgesehen ist.

4. Vorrichtung gemäß einem der vorangehenden Ansprüche, bei der das Gate der Feldeffekttransistorstruktur durch einen Luftspalt (6) von der restlichen Feldeffekttransistorstruktur getrennt ist.

5. Vorrichtung gemäß einem der vorangehenden Ansprüche, bei der das Erfassungsmaterial (4) ein Cu₃BTC₂ Metal-Organic-Framework ist.

6. Vorrichtung gemäß einem der vorangehenden Ansprüche mit einer Heizervorrichtung zur Beheizung des Metal-Organic-Frameworks.

7. Verfahren zur Herstellung einer Vorrichtung zur Erfassung wenigstens einer flüchtigen organischen Verbindung oder wenigstens eines oxidierenden Gases (5), bei dem auf einem Träger, insbesondere auf einem Siliziumsubstrat, ein Erfassungsmaterial (4) aufgebracht wird, dessen elektronische Austrittsarbeit bei einer Wechselwirkung mit der flüchtigen organischen Verbindung oder dem oxidierenden Gas (5) verändert wird, wobei das Erfassungsmaterial ein Material aus der Gruppe der Metal-Organic-Frameworks umfasst, und weiterhin Mittel zur Erfassung von Änderungen der elektronischen Austrittsarbeit des Erfassungsmaterials erzeugt werden, wobei das Erfassungsmaterial (4) als Schicht mit einem nicht gassensitiven organischen Bindemittel, insbesondere Ethylzellulose, aufgebracht wird.

## Claims

1. Apparatus for measuring at least one volatile organic compound or at least one oxidizing gas (5), which comprises:
- a measuring material (4) whose electronic work function is changed on interaction with the volatile organic compound or the oxidizing gas (5),
- means of measuring changes in the electronic work function of the measuring material,
**characterized in that** the measuring material comprises a material from the group consisting of metal-organic frameworks.

2. Apparatus according to Claim 1, wherein the means of measuring changes in the electronic work function comprise a field effect transistor structure.

3. Apparatus according to Claim 1 or 2, wherein the measuring material (4) is provided in the region of the gate of the field effect transistor structure.

4. Apparatus according to any of the preceding claims, wherein the gate of the field effect transistor structure is separated by an air gap (6) from the remaining field effect transistor structure.

5. Apparatus according to any of the preceding claims, wherein the measuring material (4) is a Cu₃BTC₂ metal-organic framework.

6. Apparatus according to any of the preceding claims having a heater device for heating the metal-organic framework.

7. Process for producing an apparatus for measuring at least one volatile organic compound or at least one oxidizing gas (5), wherein a measuring material (4) whose electronic work function is changed on interaction with the volatile organic compound or the oxidizing gas (5) is applied to a support, in particular to a silicon substrate, where the measuring material comprises a material from the group consisting of metal-organic frameworks, and also means of measuring changes in the electronic work function of the measuring material are produced, where the measuring material (4) is applied as a layer using an organic binder which is not gas-sensitive, in particular ethylcellulose.

## Revendications

1. Procédé de détection d'au moins un composé organique volatil ou d'au moins un gaz ( 5 ) oxydant, comprenant :
- un matériau ( 4 ) de détection dont le travail de sortie électronique est modifié lors d'une interaction avec le composé organique volatil ou avec le gaz ( 5 ) oxydant,
- des moyens de détection de variations du travail de sortie électronique du matériau de détection,
**caractérisé en ce que** le matériau de détection comprend un matériau du groupe des squelettes métal-organique.

2. Dispositif suivant la revendication 1, dans lequel les moyens de détection de variations du travail de sortie électronique comprennent une structure de transistor à effet de champ.

3. Dispositif suivant la revendication 1 ou 2, dans lequel le matériau ( 4 ) de détection est prévu dans la partie de la grille de la structure de transistor à effet de champ.

4. Dispositif suivant l'une des revendications précédentes, dans lequel la grille de la structure du transistor à effet de champ est séparée du reste de la structure du transistor à effet de champ par un intervalle ( 6 ) d'air.

5. Dispositif suivant l'une des revendications précédentes, dans lequel le matériau ( 4 ) de détection est un squelette métal-organique Cu₃BTC₂.

6. Dispositif suivant l'une des revendications précédentes, comprenant un dispositif de chauffage du squelette métal-organique.

7. Procédé de fabrication d'un dispositif de détection d'au moins un composé organique volatil ou d'au moins un gaz ( 5 ) oxydant, dans lequel on dépose sur un support, notamment pour un substrat en silicium, un matériau ( 4 ) de détection dont le travail de sortie électronique se modifie lors d'une interaction avec le composé organique volatil ou avec le gaz ( 5 ) oxydant, le matériau de détection comprenant un matériau du groupe des squelettes métal-organique et en outre on produit des moyens de détection de variations du travail de sortie électronique du matériau de détection, le matériau ( 4 ) de détection étant déposé, sous la forme d'une couche, avec un liant organique insensible au gaz, notamment avec de l'éthylcellulose.
